# EUROPEAN PATENT SPECIFICATION

(11) **EP 3 859 711 B1**
(45) Date of publication and mention of the grant of the patent: **15.11.2023**
(21) Application number: 20213757.6
(22) Date of filing: 14.12.2020
(51) Int. Cl.: G08G 5/00, G08G 5/04, G06N 3/09

(54) **METHOD FOR DETERMINING DEGREE OF DANGER OF AIRCRAFT AND SERVER USING THE SAME**
VERFAHREN ZUR BESTIMMUNG DES GEFÄHRDUNGSGRADES VON FLUGZEUGEN UND SERVER DAMIT
PROCÉDÉ POUR DÉTERMINER LE DEGRÉ DE DANGER D'AÉRONEF ET SERVEUR L'UTILISANT

(30) Priority: 31.01.2020 KR 20200011811
(43) Date of publication of application: 04.08.2021
(73) Proprietor: National Institute of Meteorological Sciences, Seogwipo-si, Jeju-do 63568 (KR)
(72) Inventor: CHOI, Reno Kyu-Young, 63568 Jeju-do (KR); KIM, Ki Hoon, 63568 Jeju-do (KR); PARK, Sung Hwa, 63558 Jeju-do (KR); LEE, Yoon Sang, 63135 Jeju-do (KR); KIM, Seung Bum, 63559 Jeju-do (KR)
(74) Representative: AWA Sweden AB

(56) References cited:
- WO-A1-2016/105523

## Description

The present disclosure relates to a method for determining a degree of danger of an aircraft and a server using the same.

A radiosonde is widely used as a tool to measure weather conditions in midair from an atmosphere to a stratosphere.

The radiosonde includes a sensor for measuring weather elements such as a temperature, a barometric pressure, and a humidity, and a device for transmitting measured weather elements and position information. The radiosonde measures weather elements in a rising stage by a balloon or in a descending stage by a parachute.

Around 30,000 of such radiosondes are used annually in South Korea alone. Since the radiosonde measures weather elements up to around an altitude of 30km which is within a range of the stratosphere, in order to use the weather elements obtained from the radiosonde, it is necessary to track and manage information on location of the radiosonde.

International application WO2016105523A1 titled TECHNIQUES FOR INTELLIGENT BALLOON/AIRSHIP LAUNCH AND RECOVERY WINDOW LOCATION discloses devices, methods and systems for minimizing the probability of a collision between an aircraft and a floating platform. The device may include a processor in communication with a memory. The processor is configured to obtain a flight-path vector of an aircraft; determine a probability related to a plurality of flight-paths of a floating platform over a period of time based on operating parameters for the floating platform and weather data; and determine, based on the flight-path vector and the probability related to the plurality of flight-paths of the floating platform, a time and/or a location for launch or recovery of the floating platform that minimizes a probability of a collision between the aircraft and the floating platform while the floating platform is in flight.

In a prior art of Korean Patent Laid-Open Publication No. 10-2015-0064820, a method and a system for obtaining real-time location data for the radiosonde and presenting the real-time location data on a map are disclosed.

However, the radiosonde is difficult to control once it has been floated in midair, and various elements such as wind field can affect the movement of the radiosonde. During the movement of the radiosonde, the radiosonde can be positioned at a takeoff-landing airspace of an aircraft and a traveling airspace of an aircraft which is at around an altitude of 10km. There lies possibilities of the radiosonde and the balloon attached to the radiosonde causing dangerous situations to the aircraft, but dealing with such situations may be difficult. In the prior art, a method for obtaining the real-time data of the radiosonde presenting the real-time location data on the map and presenting accumulated real-time location data as a trajectory is disclosed, but a method for considering and determining the danger that can be inflicted on the aircraft in midair by the radiosonde is not disclosed.

Therefore, a method for predicting and comparing positions of the radiosonde and those of the aircraft to determine whether predicted positions of the radiosonde and the aircraft are dangerous, and utilizing the determination thereon to enable proactive response is needed.

It is an object of the present disclosure to solve all the aforementioned problems.

It is another object of the present disclosure to enable a proactive determination on a possibility of a radiosonde inflicting dangerous effects on an aircraft at a specific predicted position of the aircraft by predicting positions of the radiosonde accurately.

It is still another object of the present disclosure to increase accuracy of the predicted positions of the radiosonde and the aircraft at respective times to determine the possibility of the radiosonde inflicting dangerous effect on the aircraft at the specific predicted position of the aircraft more accurately by predicting the positions of the radiosonde and the aircraft using a machine learning.

In order to accomplish objects above and characteristic effects to be described later of the present disclosure, distinctive structures of the present disclosure are described as follows.

In accordance with one aspect of the present disclosure, there is provided a method for determining a degree of danger of an aircraft, comprising steps of: (a) on condition that predicted wind field data for a range of an altitude and a range of a time starting from a time t, corresponding to a current time, to a time t+k have been obtained from a weather information predicting subject, a server performing a process of (i) obtaining, from a radiosonde, a first past trajectory of the radiosonde from a time t-m to the time t, wherein the first past trajectory includes a position, a velocitiy and identification information of the radiosonde from the time t-m to the time t, to thereby allow a radiosonde position obtaining part to predict each of first predicted position candidates of the radiosonde at respective times up to the time t+k by referring to the first past trajectory and the predicted wind field data, or thereby obtain each of the first predicted position candidates of the radiosonde at respective times up to the time t+k from a separate radiosonde information predicting subject, and a process of (ii) obtaining, from the aircraft, a second past trajectory of the aircraft from a time t-n to the time t, wherein the second past trajectory includes a position, a velocity, identification information, departure information and arrival information of the aircraft from the time t-n to the time t, to thereby allow an aircraft position obtaining part to predict each of second predicted position candidates of the aircraft at respective times up to the time t+k by referring to the second past trajectory and the predicted wind field data, or thereby obtain each of the second predicted position candidates of the aircraft at respective times up to the time t+k from a separate aircraft information predicting subject; and (b) the server (i) comparing each of the first predicted position candidates of the radiosonde at respective times up to the time t+k and each of the second predicted position candidates of the aircraft at respective times up to the time t+k, and (ii) if a specific first predicted position, selected from the first predicted position candidates of the radiosonde, at a specific time is included within a first threshold range, wherein the first threshold range is determined by referring to a specific second predicted position selected from the second predicted position candidates of the aircraft at the specific time, determining or supporting another device to determine the specific second predicted position of the aircraft at the specific time to be dangerous.

As one example, each of the first predicted position candidates of the radiosonde at respective times from the time t to the time t+k include first probability values predicted by the server for each of the first predicted position candidates of the radiosonde at respective times from the time t to the time t+k, by referring to the first past trajectory of the radiosonde from the time t-m to the time t, wherein each of the second predicted position candidates of the aircraft at respective times from the time t to the time t+k include second probability values predicted by the server for each of the second predicted position candidates of the aircraft at respective times from the time t to the time t+k by referring to the second past trajectory of the aircraft from the time t-n to the time t, and wherein the server calculates third probability values as collision risks which are degrees of danger of the aircraft colliding with the radiosonde at respective times up to the time t+k by referring to the first probability values for each of the first predicted position candidates and the second probability values for each of the second predicted position candidates.

As one example, if at least one specific third probability value selected from the third probability values is identical to or higher than a second threshold the server provides the specific third probability value to an air traffic control subject, to thereby allow the air traffic control subject to provide a warning signal to the aircraft.

As one example, at the step of (a), the server receives a broadcasted signal from the aircraft based on an ADS-B (Automatic Dependent Surveillance-Broadcast) system through a separate signal receiving device, to thereby allow the aircraft position obtaining part to analyze the broadcasted signal so as to obtain the second past trajectory of the aircraft, or the server receives analyzed data of the broadcasted signal from the aircraft information predicting subject as the second past trajectory of the aircraft.

As one example, wherein the radiosonde is determined as present in at least one specific position selected from (i) respective positions at a first phase state where the radiosonde starts to float and reaches a maximum height, and (ii) respective positions at a second phase state where the radiosonde starts to descend after reaching the maximum height, and wherein the server determines whether the specific position of the radiosonde at respective times from the time t to the time t+k corresponds to the first phase state or the second phase state, and then the server allows the radiosonde position obtaining part to further receive at least one first altitude characteristic of the radiosonde corresponding to the first phase state and at least one second altitude characteristic of the radiosonde corresponding to the second phase state, to thereby predict the first predicted position candidates of the radiosonde.

As one example, the radiosonde position obtaining part performs a machine learning to predict the first predicted position candidates of the radiosonde, before the step of (a), the method further comprises a step of: (a0) on condition that past wind field data for the range of the altitude and a range of a time starting from a time t-y to a time t-z have been obtained from the weather information predicting subject, the server performing a process of (i) obtaining a (1_1)-st past trajectory for training of the radiosonde from a time t-x to the time t-y, wherein the (1_1)-st past trajectory for training includes a position, a velocity and identification information of the radiosonde from the time t-x to the time t-y, and performing learning operations using training data comprised of the (1_1)-st past trajectory for training and the past wind field data to thereby allow the radiosonde position obtaining part to predict each of first predicted position candidates for training of the radiosonde at respective times from the time t-y to the time t-z, and a process of (ii) obtaining a (1_2)-nd past trajectory for training of the radiosonde from the time t-y to the time t-z, wherein the (1_2)-nd past trajectory for training includes a position, a velocity and identification information of the radiosonde from the time t-y to the time t-z, and comparing the (1_2)-nd past trajectory for training serving as a first GT (Ground Truth) with each of the first predicted position candidates for training of the radiosonde at respective times, to thereby allow the radiosonde position obtaining part to perform the machine learning.

As one example, the radiosonde is determined as present in at least one specific position selected from (i) respective positions at a first phase state where the radiosonde starts to float and reaches a maximum height and (ii) respective positions at a second phase state where the radiosonde starts to descend after reaching the maximum height and wherein the server determines whether the specific position of the radiosonde at respective times from the time t-y to the time t-z corresponds to the first phase state or the second phase state, and then the server allows the radiosonde position obtaining part to further receive at least one of the first altitude characteristic corresponding to the first phase state and at least one of the second altitude characteristic of the radiosonde corresponding to the second phase state to thereby predict the first predicted position candidates for training of the radiosonde.

As one example, the aircraft position obtaining part performs a machine learning to predict the second predicted position candidates of the aircraft, wherein, before the step of (a), the method further comprises a step of: (a00) on condition that past wind field data for the range of the altitude and a range of a time starting from a time t-y to a time t-z have been obtained from the weather information predicting subject, the server performing a process of (i) obtaining a (2_1)-st past trajectory for training of the aircraft from the time t-x to the time t-y, wherein the (2_1)-st past trajectory for training includes a position, a velocity, identification information, departure information and arrival information of the aircraft from the time t-x to the time t-y, and performing learning operations using training data comprised of the (2_1)-st past trajectory for training and the past wind field data to thereby allow the aircraft position obtaining part to predict each of the second predicted position candidates for training of the aircraft at respective times from the time t-y to the time t-z, and a process of (ii) obtaining a (2_2)-nd past trajectory for training of the aircraft from the time t-y to the time t-z, wherein the (2_2)-nd past trajectory for training includes a position, a velocity, identification information, departure information and arrival information of the aircraft from the time t-y to the time t-z, and comparing the (2_2)-nd past trajectory for training serving as a second GT (Ground Truth) with each of the second predicted position candidates for training of the aircraft at respective times, to thereby allow the aircraft position obtaining part to perform the machine learning.

As one example, the radiosonde position obtaining part performs a machine learning to predict the first predicted position candidates of the radiosonde, wherein, before the step of (a), the method further comprises a step of: (a0) on condition that past wind field data for the range of the altitude and a range of a time starting from a time t-y to a time t-z have been obtained from the weather information predicting subject, the server performing a process of (i) obtaining a (1_1)-st past trajectory for training of the radiosonde from a time t-x to the time t-y, wherein the (1_1)-st past trajectory for training includes a position, a velocity and identification information of the radiosonde from the time t-x to the time t-y, and performing learning operations using training data comprised of the (1_1)-st past trajectory for training and the past wind field data to thereby allow the radiosonde position obtaining part to predict each of first predicted position candidates for training of the radiosonde at respective times from the time t-y to the time t-z, and a process of (ii) obtaining a (1_2)-nd past trajectory for training of the radiosonde from the time t-y to the time t-z, wherein the (1_2)-nd past trajectory for training includes a position, a velocity and identification information of the radiosonde from the time t-y to the time t-z, and comparing the (1_2)-nd past trajectory for training serving as a first GT (Ground Truth) with each of the first predicted position candidates for training of the radiosonde at respective times, to thereby allow the radiosonde position obtaining part to perform the first machine learning, wherein the aircraft position obtaining part performs a second machine learning to predict the second predicted position candidates of the aircraft, wherein, before the step of (a), the method further comprises a step of: (a00) on condition that the past wind field data for the range of the altitude and the range of the time starting from the time t-y to the time t-z have been obtained from the weather information predicting subject, the server performing a process of (i) obtaining a (2_1)-st past trajectory for training of the aircraft from the time t-x to the time t-y, wherein the (2_1)-st past trajectory for training includes a position, a velocity, identification information, departure information and arrival information of the aircraft from the time t-x to the time t-y, and performing learning operations using training data comprised of the (2_1)-st past trajectory for training and the past wind field data to thereby allow the aircraft position obtaining part to predict each of the second predicted position candidates for training of the aircraft at respective times from the time t-y to the time t-z, and a process of (ii) obtaining a (2_2)-nd past trajectory for training of the aircraft from the time t-y to the time t-z, wherein the (2_2)-nd past trajectory for training includes a position, a velocity, identification information, departure information and arrival information of the aircraft from the time t-y to the time t-z, and comparing the (2_2)-nd past trajectory for training serving as a second GT (Ground Truth) with each of the second predicted position candidates for training of the aircraft at respective times, to thereby allow the aircraft position obtaining part to perform the second machine learning, wherein the fisrt and the second machine learnings for the radiosonde position obtaining part and the aircraft position obtaining part includes (i) a process of the server allowing the radiosonde obtaining part to compare each of the first predicted position candidates for training of the radiosonde at respective times from the time t-y to the time t-z and the (1_2)-nd past trajectory for training of the radiosonde serving as the first GT (Ground Truth) to thereby perform a first back propagation which adjusts at least one of multiple parameters included in the radiosonde position obtaining part to minimize differences therebetween, and (ii) a process of the server allowing the aircraft position obtaining part to compare each of the second predicted position candidates for training of the aircraft at respective times from the time t-y to the time t-z and the (2_2)-nd past trajectory for training of the aircraft serving as the second GT (Ground Truth) to thereby perform a second back propagation which adjusts at least one of multiple parameters included in the aircraft position obtaining part to minimize differences therebetween.

As one example, if at least part of each of the first predicted position candidates of the radiosonde at respective times up to the time t+k is included in a predetermined safety airspace for an airport, the server provides information thereon to an air traffic control subject of the airport to thereby allow the air traffic control subject to provide a warning signal to an airplane which takes off and lands at the airport.

In accordance with another aspect of the present disclosure, there is provided a server for determining a degree of danger of an aircraft, comprising: at least one memory that stores instructions; and at least one processor configured to execute the instructions to perform or support another device to perform: (I) on condition that predicted wind field data for a range of an altitude and a range of a time starting from a time t, corresponding to a current time, to a time t+k have been obtained from a weather information predicting subject, performing a process of (i) obtaining, from a radiosonde, a first past trajectory of the radiosonde from a time t-m to the time t, wherein the first past trajectory includes a position, a velocitiy and identification information of the radiosonde from the time t-m to the time t, to thereby allow a radiosonde position obtaining part to predict each of first predicted position candidates of the radiosonde at respective times up to the time t+k by referring to the first past trajectory and the predicted wind field data, or thereby obtain each of the first predicted position candidates of the radiosonde at respective times up to the time t+k from a separate radiosonde information predicting subject, and a process of (ii) obtaining, from the aircraft, a second past trajectory of the aircraft from a time t-n to the time t, wherein the second past trajectory includes a position, a velocity, identification information, departure information and arrival information of the aircraft from the time t-n to the time t, to thereby allow an aircraft position obtaining part to predict each of second predicted position candidates of the aircraft at respective times up to the time t+k by referring to the second past trajectory and the predicted wind field data, or thereby obtain each of the second predicted position candidates of the aircraft at respective times up to the time t+k from a separate aircraft information predicting subject; and (II) (i) comparing each of the first predicted position candidates of the radiosonde at respective times up to the time t+k and each of the second predicted position candidates of the aircraft at respective times up to the time t+k, and (ii) if a specific first predicted position, selected from the first predicted position candidates of the radiosonde, at a specific time is included within a first threshold range, wherein the first threshold range is determined by referring to a specific second predicted position selected from the second predicted position candidates of the aircraft at the specific time, determining or supporting another device to determine the specific second predicted position of the aircraft at the specific time to be dangerous.

As one example, wherein each of the first predicted position candidates of the radiosonde at respective times from the time t to the time t+k include first probability values predicted by the server for each of the first predicted position candidates of the radiosonde at respective times from the time t to the time t+k, by referring to the first past trajectory of the radiosonde from the time t-m to the time t, wherein each of the second predicted position candidates of the aircraft at respective times from the time t to the time t+k include second probability values predicted by the processor for each of the second predicted position candidates of the aircraft at respective times from the time t to the time t+k by referring to the second past trajectory of the aircraft from the time t-n to the time t, and wherein the processor calculates third probability values as collision risks which are degrees of danger of the aircraft colliding with the radiosonde at respective times up to the time t+k by referring to the first probability values for each of the first predicted position candidates and the second probability values for each of the second predicted position candidates.

As one example, if at least one specific third probability value selected from the third probability values is identical to or higher than a second threshold the processor provides the specific third probability value to an air traffic control subject, to thereby allow the air traffic control subject to provide a warning signal to the aircraft.

As one example, at the process of (I), the processor receives a broadcasted signal from the aircraft based on an ADS-B (Automatic Dependent Surveillance-Broadcast) system through a separate signal receiving device, to thereby allow the aircraft position obtaining part to analyze the broadcasted signal so as to obtain the second past trajectory of the aircraft, or the processor receives analyzed data of the broadcasted signal from the aircraft information predicting subject as the second past trajectory of the aircraft.

As one example, wherein the radiosonde is determined as present in at least one specific position selected from (i) respective positions at a first phase state where the radiosonde starts to float and reaches a maximum height, and (ii) respective positions at a second phase state where the radiosonde starts to descend after reaching the maximum height, and wherein the processor determines whether the specific position of the radiosonde at respective times from the time t to the time t+k corresponds to the first phase state or the second phase state, and then the processor allows the radiosonde position obtaining part to further receive at least one first altitude characteristic of the radiosonde corresponding to the first phase state and at least one second altitude characteristic of the radiosonde corresponding to the second phase state, to thereby predict the first predicted position candidates of the radiosonde.

As one example, the radiosonde position obtaining part performs a machine learning to predict the first predicted position candidates of the radiosonde, wherein, before the process of (I), the processor further performs or supports other device to perform: (I0) on condition that past wind field data for the range of the altitude and a range of a time starting from a time t-y to a time t-z have been obtained from the weather information predicting subject, the processor performing a process of (i) obtaining a (1_1)-st past trajectory for training of the radiosonde from a time t-x to the time t-y, wherein the (1_1)-st past trajectory for training includes a position, a velocity and identification information of the radiosonde from the time t-x to the time t-y, and performing learning operations using training data comprised of the (1_1)-st past trajectory for training and the past wind field data to thereby allow the radiosonde position obtaining part to predict each of first predicted position candidates for training of the radiosonde at respective times from the time t-y to the time t-z, and a process of (ii) obtaining a (1_2)-nd past trajectory for training of the radiosonde from the time t-y to the time t-z, wherein the (1_2)-nd past trajectory for training includes a position, a velocity and identification information of the radiosonde from the time t-y to the time t-z, and comparing the (1_2)-nd past trajectory for training serving as a first GT (Ground Truth) with each of the first predicted position candidates for training of the radiosonde at respective times, to thereby allow the radiosonde position obtaining part to perform the machine learning.

As one example, the radiosonde is determined as present in at least one specific position selected from (i) respective positions at a first phase state where the radiosonde starts to float and reaches a maximum height and (ii) respective positions at a second phase state where the radiosonde starts to descend after reaching the maximum height and wherein the processor determines whether the specific position of the radiosonde at respective times from the time t-y to the time t-z corresponds to the first phase state or the second phase state, and then the processor allows the radiosonde position obtaining part to further receive at least one of the first altitude characteristic corresponding to the first phase state and at least one of the second altitude characteristic of the radiosonde corresponding to the second phase state to thereby predict the first predicted position candidates for training of the radiosonde.

As one example, the aircraft position obtaining part performs a machine learning to predict the second predicted position candidates of the aircraft, wherein, before the process of (I), the processor further performs or supports other device to perform: (I00) on condition that past wind field data for the range of the altitude and a range of a time starting from a time t-y to a time t-z have been obtained from the weather information predicting subject, the processor performing a process of (i) obtaining a (2_1)-st past trajectory for training of the aircraft from the time t-x to the time t-y, wherein the (2_1)-st past trajectory for training includes a position, a velocity, identification information, departure information and arrival information of the aircraft from the time t-x to the time t-y, and performing learning operations using training data comprised of the (2_1)-st past trajectory for training and the past wind field data to thereby allow the aircraft position obtaining part to predict each of the second predicted position candidates for training of the aircraft at respective times from the time t-y to the time t-z, and a process of (ii) obtaining a (2_2)-nd past trajectory for training of the aircraft from the time t-y to the time t-z, wherein the (2_2)-nd past trajectory for training includes a position, a velocity, identification information, departure information and arrival information of the aircraft from the time t-y to the time t-z, and comparing the (2_2)-nd past trajectory for training serving as a second GT (Ground Truth) with each of the second predicted position candidates for training of the aircraft at respective times, to thereby allow the aircraft position obtaining part to perform the machine learning.

As one example, the radiosonde position obtaining part performs a first machine learning to predict the first predicted position candidates of the radiosonde, wherein, before the process of (I), the processor further performs or supports other device to perform: (I0) on condition that past wind field data for the range of the altitude and a range of a time starting from a time t-y to a time t-z have been obtained from the weather information predicting subject, the processor performing a process of (i) obtaining a (1_1)-st past trajectory for training of the radiosonde from a time t-x to the time t-y, wherein the (1_1)-st past trajectory for training includes a position, a velocity and identification information of the radiosonde from the time t-x to the time t-y, and performing learning operations using training data comprised of the (1_1)-st past trajectory for training and the past wind field data to thereby allow the radiosonde position obtaining part to predict each of first predicted position candidates for training of the radiosonde at respective times from the time t-y to the time t-z, and a process of (ii) obtaining a (1_2)-nd past trajectory for training of the radiosonde from the time t-y to the time t-z, wherein the (1_2)-nd past trajectory for training includes a position, a velocity and identification information of the radiosonde from the time t-y to the time t-z, and comparing the (1_2)-nd past trajectory for training serving as a first GT (Ground Truth) with each of the first predicted position candidates for training of the radiosonde at respective times, to thereby allow the radiosonde position obtaining part to perform the first machine learning, wherein the aircraft position obtaining part performs a second machine learning to predict the second predicted position candidates of the aircraft, wherein, before the process of (I), the processor further performs or supports other device to perform: (I00) on condition that the past wind field data for the range of the altitude and the range of the time starting from the time t-y to the time t-z have been obtained from the weather information predicting subject, the processor performing a process of (i) obtaining a (2_1)-st past trajectory for training of the aircraft from the time t-x to the time t-y, wherein the (2_1)-st past trajectory for training includes a position, a velocity, identification information, departure information and arrival information of the aircraft from the time t-x to the time t-y, and performing learning operations using training data comprised of the (2_1)-st past trajectory for training and the past wind field data to thereby allow the aircraft position obtaining part to predict each of the second predicted position candidates for training of the aircraft at respective times from the time t-y to the time t-z, and a process of (ii) obtaining a (2_2)-nd past trajectory for training of the aircraft from the time t-y to the time t-z, wherein the (2_2)-nd past trajectory for training includes a position, a velocity, identification information, departure information and arrival information of the aircraft from the time t-y to the time t-z, and comparing the (2_2)-nd past trajectory for training serving as a second GT (Ground Truth) with each of the second predicted position candidates for training of the aircraft at respective times, to thereby allow the aircraft position obtaining part to perform the second machine learning, wherein the fisrt and the second machine learnings for the radiosonde position obtaining part and the aircraft position obtaining part includes (i) a process of the server allowing the radiosonde obtaining part to compare each of the first predicted position candidates for training of the radiosonde at respective times from the time t-y to the time t-z and the (1_2)-nd past trajectory for training of the radiosonde serving as the first GT (Ground Truth) to thereby perform a first back propagation which adjusts at least one of multiple parameters included in the radiosonde position obtaining part to minimize differences therebetween, and (ii) a process of the processor allowing the aircraft position obtaining part to compare each of the second predicted position candidates for training of the aircraft at respective times from the time t-y to the time t-z and the (2_2)-nd past trajectory for training of the aircraft serving as the second GT (Ground Truth) to thereby perform a second back propagation which adjusts at least one of multiple parameters included in the aircraft position obtaining part to minimize differences therebetween.

As one example, if at least part of each of the first predicted position candidates of the radiosonde at respective times up to the time t+k is included in a predetermined safety airspace for an airport, the processor provides information thereon to an air traffic control subject of the airport to thereby allow the air traffic control subject to provide a warning signal to an airplane which takes off and lands at the airport.

The above and other objects and features of the present invention will become apparent from the following description of preferred embodiments given in conjunction with the accompanying drawings, in which:
Fig. 1 is a drawing schematically illustrating a server for determining a degree of danger of an aircraft in accordance with one example embodiment of the present disclosure.
Fig. 2 is a drawing schematically illustrating steps performed in a method for determining the degree of danger of the aircraft in accordance with one example embodiment of the present disclosure.
Fig. 3 is a drawing schematically illustrating an entire configuration of the aircraft obtaining a past trajectory of the aircraft based on an aircraft monitoring system ADS-B (Automatic Dependent Surveillance-Broadcast) in accordance with one example embodiment of the present disclosure.
Fig. 4 is a drawing schematically illustrating positions of the radiosonde at respective times according to altitude characteristics in accordance with one example embodiment of the present disclosure.
Fig. 5A is a drawing schematically illustrating steps of a machine learning performed on a radiosonde position obtaining part in accordance with one example embodiment of the present disclosure.
Fig. 5B is a drawing schematically illustrating steps of a machine learning performed on an aircraft position obtaining part in accordance with one example embodiment of the present disclosure.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention.

In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views. The headings and abstract of the present disclosure provided herein are for convenience only and do not limit or interpret the scope or meaning of the embodiments.

To allow those skilled in the art to the present disclosure to be carried out easily, the example embodiments of the present disclosure by referring to attached diagrams will be explained in detail as shown below.

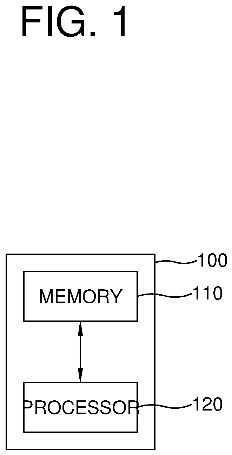

Fig. 1 is a drawing schematically illustrating a server 100 for determining a degree of danger of an aircraft in accordance with one example embodiment of the present disclosure.

By referring to Fig. 1, the server 100 may include a memory 110 and a processor 120. Herein, the memory 110 may store instructions for the processor 120, and the instructions may be code generated to allow the server 100 to be operated in a specific way, and may be stored in the memory 110 usable or readable by a computer, i.e., a programmable data processing device, or in the computer. The instructions may execute the processes described in the present disclosure.

And the processor 120 may include hardware configuration of MPU (Micro Processing Unit) or CPU (Central Processing Unit), cache memory, data bus, etc. Additionally, any OS (operating system) and software configuration of applications that achieve specific purposes may further be included.

Next, the server 100 may be in conjunction with at least one storage to be used for a file system and for storing update packages. Herein, the storage may include at least one of a flash memory type, a hard disk type, a multimedia card micro type, a card type memory (for example, SD or XD memory), a random access memory (RAM), a static random access memory (SRAM), a read only memory (ROM), an electrically erasable programmable read only memory (EEPROM), a programmable read only memory (PROM), a magnetic memory, a magnetic disk, and an optical disk. However, the scope of the present disclosure is not limited to these examples and may include all media capable of storing data. Alternatively, the storage may be included inside the server 100, or may be prepared separately from the server 100 to transmit data or record received data as the case may be.

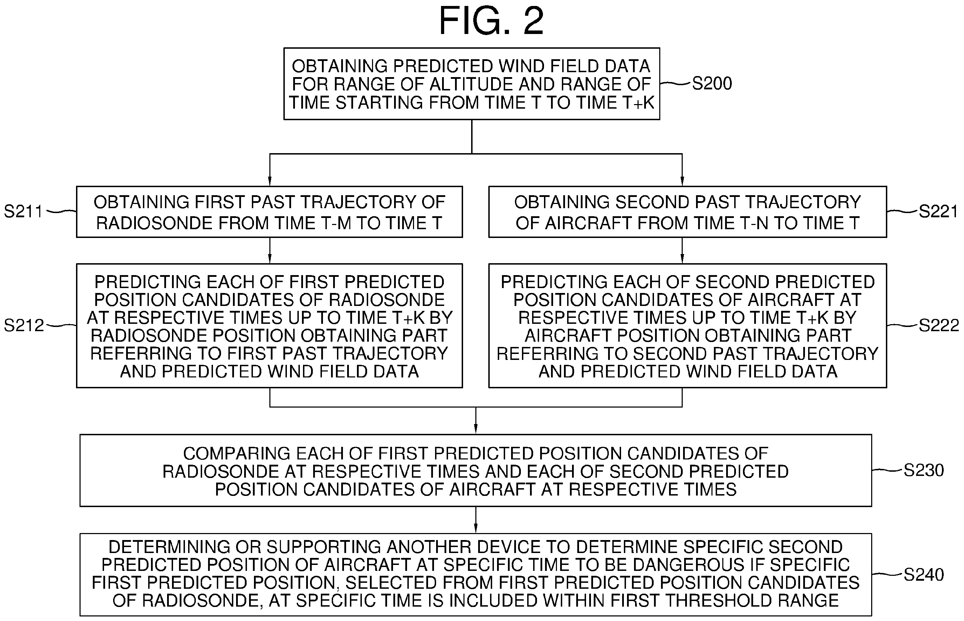

Fig. 2 is a drawing schematically illustrating steps performed in a method for determining the degree of danger of the aircraft in accordance with one example embodiment of the present disclosure.

By referring to Fig. 2, the processor 120 of the server 100 may obtain predicted wind field data for a range of an altitude and a range of a time starting from a time t, i.e., a current time, to a time t+k from a weather information predicting subject at a step of S200. Herein, the range of the altitude is where the radiosonde and the aircraft can be positioned. The range of the altitude may reach up to a maximum height of the radiosonde, since the radiosonde can generally be positioned up to around an altitude of 30km in a rising stage by a balloon injected with gas, e.g., helium, and the aircraft generally travels below the maximum height of the radiosonde. However, the scope of the present disclosure is not limited thereto. The range of the altitude may be set differently as the case may be. Further, the weather information predicting subject, e.g., meteorological agency, may predict wind fields for respective altitudes where the radiosonde and the aircraft can be positioned, e.g., across the Korean peninsula, etc.

Then, the processor 120 of the server 100 may obtain, from a radiosonde, a first past trajectory of the radiosonde from a time t-m to the time t at a step of S211. Herein, the first past trajectory may include a position, a velocitiy and identification information of the radiosonde from the time t-m to the time t.

Although the term of "past" is included, "the first past trajectory" actually includes information on trajectory from the time t-m to the time t, i.e., the current time. The same applies to the second past trajectory of the aircraft described below.

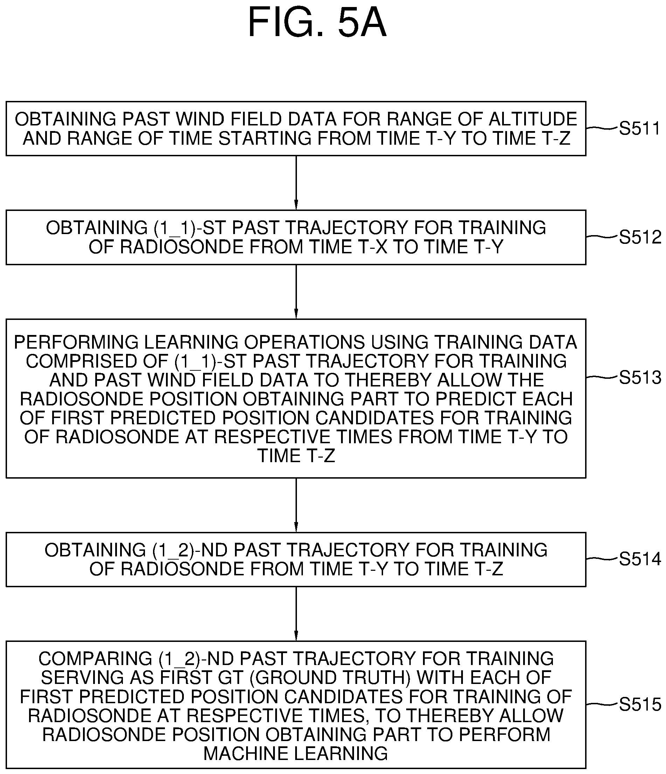

Next, the processor 120 of the server 100 may allow a radiosonde position obtaining part to predict each of first predicted position candidates of the radiosonde at respective times up to the time t+k by referring to the first past trajectory and the predicted wind field data at a step of S212. Herein, as one example, the radiosonde position obtaining part may be a prediction model for predicting each of the first predicted position candidates at respective times, and the prediction model may be operated using a machine learning. Details for the machine learning will be described below referring to a separate figure (Fig. 5A). Also, the first predicted position candidiates may be obtained at respective times. This is not limited to a specific time interval and may be obtained with various time intervals. For example, if the first predicted position candidates are obtained every one minute, the first predicted position candidates may be obtained every one minute from the time t to the time t+k.

Further, as another example, the processor 120 of the server 100 may connect each of first predicted positions of the radiosonde with the passage of time and determine this connected line as a predicted trajectory of the radiosonde. The predicted trajectory of the radiosonde may be provided with information on each of the first predicted positions of the radiosonde.

And as still another example, the processor 120 of the server 100 may obtain each of the first predicted position candidates of the radiosonde at respective times up to the time t+k from a separate radiosonde information predicting subject. In this case, the radiosonde position obtaining part may skip the process of obtaining the first predicted position candidates of the radiosonde, and perform the process of managing the first predicted position candidates of the radiosonde at respective times obtained from the radiosonde information predicting subject and providing the information thereon to the processor 120 of the server 100.

Next, obataining and predicting information on the aircraft at steps of S221 and S222 may be performed together or independently with steps of obataining and predicting information on the radiosonde at the steps of S211 and S212 as described below.

On condition that the predicted wind field data for the range of the altitude and the range of the time starting from the time t to the time t+k have been obtained from a weather information predicting subject at a step of S200, the processor 120 of the server 100 may obtain the second past trajectory of the aircraft from the time t-n to the time t from the aircraft at the step of S221. Herein, the second past trajectory may include a position, a velocity, identification information, departure information and arrival information of the aircraft from the time t-n to the time t.

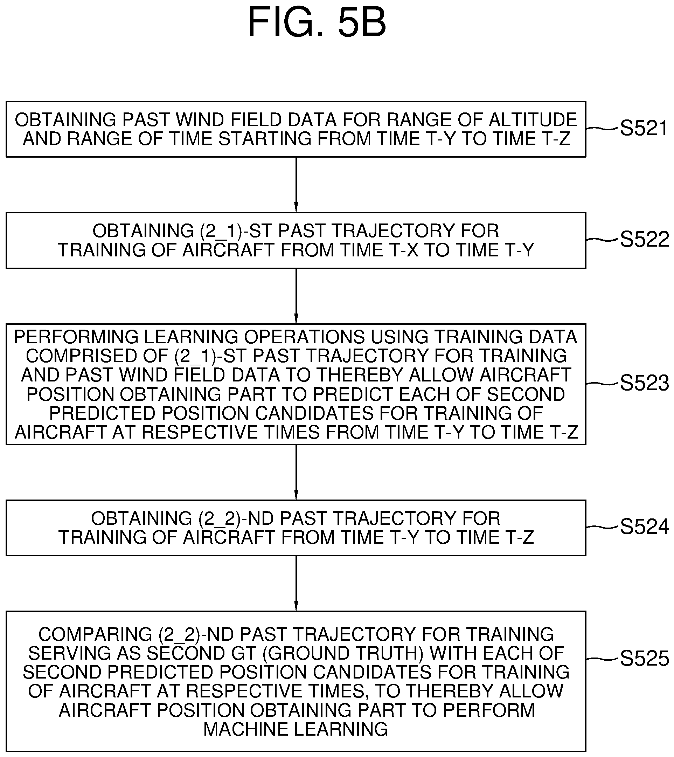

Then, the processor 120 of the server 100 may allow an aircraft position obtaining part to predict each of second predicted position candidates of the aircraft at respective times up to the time t+k by referring to the second past trajectory and the predicted wind field data at the step of S222. Herein, as one example, the aircraft position obtaining part may be a prediction model for predicting each of the second predicted position candidates at respective times, and the prediction model may be operated using a machine learning. Details for the machine learning will be described below referring to a separate figure (Fig. 5B). Also, the second predicted position candidiates may be obtained at respective times. This is not limited to a specific time interval and may be obtained with various time intervals. For example, if the second predicted position candidates are obtained every one second, the first predicted position candidates may be obtained every one second from the time t to the time t+k.

Further, as still yet another example, the processor 120 of the server 100 may connect each of second predicted positions of the aircraft with the passage of time and determine this connected line as a predicted trajectory of the aircraft. The predicted trajectory of the aircraft may be provided with information on each of the second predicted positions of the aircraft.

And as still yet another example, the processor 120 of the server 100 may obtain each of the second predicted position candidates of the aircraft at respective times up to the time t+k from a separate aircraft information predicting subject. In this case, the aircraft position obtaining part may skip the process of obtaining the second predicted position candidates of the aircraft, and perform the process of managing the second predicted position candidates of the aircraft at respective times obtained from the aircraft information predicting subject and providing the information thereon to the processor 120 of the server 100.

After obtaining each of the first predicted position candidates of the radiosonde and the second predicted position candidates of the aircraft through steps described above, the processor 120 of the server 100 may compare (i) each of the first predicted position candidates up to the time t+k and (ii) each of the second predicted position candidates up to the time t+k at a step of S230. Herein, time intervals adopted in the first predicted position candidates of the radiosonde and those adopted in the second predicted position candidates of the aircraft may be different. In this case, a specific time interval which corresponds to both of predicted position candidates may be used. For example, in case the first predicted position candidates have been obtained every one minute and the second predicted position candidates have been obtained every one second, specific second predicted position candidates and the first predicted position candidates may be compared every one minute.

Then, in case a specific first predicted position, selected from the first predicted position candidates of the radiosonde, at a specific time is included within a first threshold range, wherein the first threshold range is determined by referring to a specific second predicted position selected from the second predicted position candidates of the aircraft at the specific time, the processor 120 of the server 100 may determine or support another device to determine the specific second predicted position of the aircraft at the specific time to be dangerous. For example, in case the specific second predicted position of the aircraft after an hour later from the time t is included in a range of 500m radius from the specific first predicted position of the radiosonde corresponding to an hour later from the time t, the processor 120 of the server 100 may determine that the radiosonde may inflict danger on the aircraft at the specific second predicted position of the aircraft after an hour from the time t or provide information thereon to support another device to determine whether the radiosonde is dangerous to the aircraft on the specific second predicted position of the aircraft after an hour from the time t.

And, as still yet another example, each of the first predicted position candidates of the radiosonde at respective times from the time t to the time t+k may include first probability values predicted by referring to the first past trajectory of the radiosonde from the time t-m to the time t through the processor 120 of the server 100. Also, each of the second predicted position candidates of the aircraft at respective times from the time t to the time t+k may include second probability values predicted by referring to the second past trajectory of the aircraft from the time t-n to the time t through the processor 120 of the server 100.

And, the processor 120 of the server 100 may calculate third probability values as collision risks which are degrees of danger of the aircraft colliding with the radiosonde at respective times up to the time t+k by referring to the first probability values for each of the first predicted position candidates and the second probability values for each of the second predicted position candidates. Herein, the method for calculating the third probability value is not limited to a specific method for calculating.

Further, as still yet another example, if at least one specific third probability value selected from the third probability values is identical to or higher than a second threshold, the server 100 provides the specific third probability value to an air traffic control subject, to thereby allow the air traffic control subject to provide a warning signal to the aircraft. For example, in case the specific third probability value is calculated as 30% when the second threshold is 25%, the processor 120 of the server 100 provides information on the specific third probability value to the air traffic control subject, e.g., a control station of the airport, which can communicate with the aircraft corresponding to the specific second probability value used to calculate the specific third probability value, so as to provide or support another device to provide the warning signal to the aircraft. Furthermore, other than the information on the third probability value, at least part of the first probability values on each of the first predicted position candidates of the radiosonde at respective times and the second probability values on each of the second predicted position candidates of the aircraft at respective times may be provided.

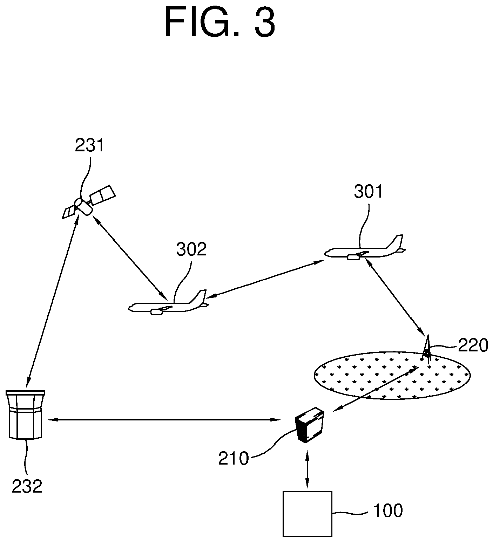

Fig. 3 is a drawing schematically illustrating an entire configuration of obtaining a past trajectory of the aircraft based on an aircraft monitoring system ADS-B (Automatic Dependent Surveillance-Broadcast) in accordance with one example embodiment of the present disclosure.

By referring to Fig. 3, the ADS-B system may include a ground transceiver 220 which can receive and transmit various signals from/to a first aircraft 301, and an ADS-B managning system 210 which manages and processes information such as a location, velocity, identification information, departure information and arrival information of the first aircraft 301 included in the received signal. The ADS-B system may further include a satellite 231 which can receive and transmit various signals from/to a second aircraft 302 (the second aircraft 302 travels above a sea surface which the ground transceiver 220 cannot be set), and the satellite transceiver 232 which can receive and transmit various signals from/to a satellite 231 to allow the ADS-B managing system 210 to also manage information of the second aircraft 302 obtained from the satellite transceiver 232. Herein, signals can be received or transmitted between the first aircraft 301 and the second aircraft 302.

And, as shown in Fig. 3, the server 100, in conjunction with the ADS-B managing system 210, may obtain a position, a velocity, identification information, departure information and arrival information for the first aircraft 301 and the second aircraft 302 respectively from broadcasted signals of the first aircraft 301 and the second aircraft 302 as the second past trajectory of the first aircraft 301 and the second aircraft 302 respectively. Also, as still yet another example, the server 100 may be configured as the ADS-B managing system 210 and may be directly connected with the ground transceiver 220 to receive signals from the first aircraft 301 and accumulate the signals from the first aircraft 301 as the second past trajectory. Herein, the satellite 231 and the satellite transceiver 232 may not be included, as the case may be.

Also, as still yet another example, the processor 120 of the server 100 may obtain analyzed data of the broadcasted signal from the aircraft information predicting subject as the second past trajectory of the aircraft. In this case, the aircraft information predicting subject may be in conjunction with the ADS-B system.

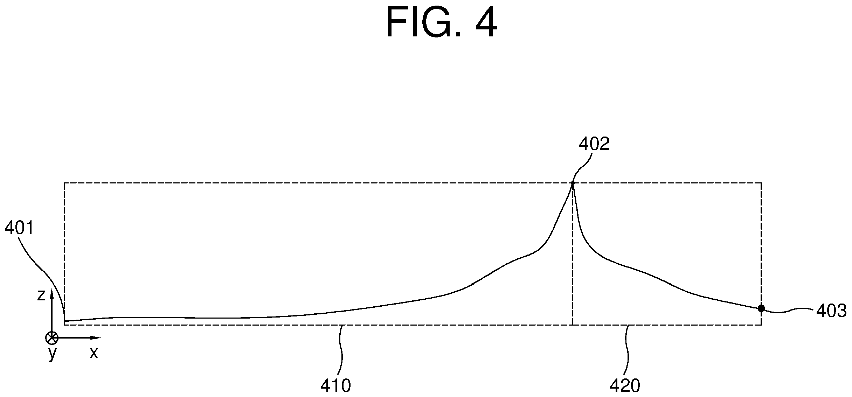

Fig. 4 is a drawing schematically illustrating positions of the radiosonde at respective times according to altitude characteristics in accordance with one example embodiment of the present disclosure.

By referring to Fig. 4, the radiosonde may be floated from an initial position 401 and moved by wind field. Movement of the radiosonde with the passage of time is shown in Fig. 4. For example, the radiosonde moving in the positive direction of x-axis may correspond to the radiosonde moving east and the radiosonde moving in the positive direction of y-axis may correspond to the radiosonde rising up. For reference, although only the x-axis and the y-axis is shown in Fig. 4, the radiosonde would also be movable in a direction of z-axis. However, for the purpose of clear explanation, movement of the radiosonde in the direction of z-axis is not considered.

And, the radiosonde may be present in at least one specific position selected from respective positions at a first phase state 410 where the radiosonde starts to float and reaches a maximum height 402 and respective positions at a second phase state 420 where the radiosonde starts to descend after reaching the maximum height 402. Positions of the radiosonde at respective times may be obtained till the radiosonde reaches a final position 403 where the signal disappears. Herein, the processor 120 of the server 100 may determine whether the specific position of the radiosonde at respective times from the time t to the time t+k corresponds to the first phase state or the second phase state, and then the processor 120 of the server 100 allows the radiosonde position obtaining part to further receive at least one first altitude characteristic of the radiosonde corresponding to the first phase state and at least one second altitude characteristic of the radiosonde corresponding to the second phase state, to thereby predict the first predicted position candidates of the radiosonde. Herein, the first altitude characteristic of the radiosonde may be characteristics that affect the position of the radiosonde according to a change of altitude, such as a decrease in barometric pressure due to higher altitude. Such higher altitude causes the balloon to which the radiosonde is attached to inflate. The higher altitude may also cause weaker influence of the wind field to the balloon and the radiosonde, by lack of air as the balloon and the radiosonde gets closer to the stratosphere. The processor 120 of the server 100 may allow the radiosonde position obtaining part to further receive the first altitude characteristic corresponding to the first phase state and to predict the first position candidates. In the same way, the second altitude characteristics of the radiosonde may be characteristics that affect the position of the raiosonde according to a change of altitude, during the radiosonde loosing its height. The radiosonde may loose its height by using an apparatus working as a parachute, after the balloon to which the radiosonde is attached bursts as the radiosonde reaches the maximum height 402 and the parachute is deployed. Herein, the second altitude characteristics may be different from the first altitude characteristics. For example, in the stratosphere, the radiosonde descends similar to a free fall despite the parachute. This is caused by the lack of air and the weaker influence of the wind field. As the radiosonde enters the troposphere, the radiosonde also moves horizontally since the influence of the wind field becomes stronger. The processor 120 of the server 100 may allow the radiosonde position obtaining part to further receive the second altitude characteristic corresponding to the second phase state to predict the first position candidates of the radiosonde.

Herein, the phrase 'corresponding to the first phase state' and the phrase 'corresponding to the second phase state' may mean 'at respective positions of the first phase state' and 'at respective positions of the second phase state' respectively.

Fig. 5A is a drawing schematically illustrating steps of a machine learning performed on the radiosonde position obtaining partin accordance with one example embodiment of the present disclosure.

By referring to Fig. 5A, the machine learning for the radiosonde position obtaining part can be performed with following processes.

On condition that past wind field data for the range of the altitude and a range of a time starting from a time t-y to a time t-z have been obtained from the weather information predicting subject at a step of S511, the processor 120 of the server 100 may perform a process of obtaining a (1_1)-st past trajectory for training of the radiosonde from a time t-x to the time t-y at a step of S512. Herein, the (1_1)-st past trajectory for training may include a position, a velocity and identification information of the radiosonde from the time t-x to the time t-y. Further, the weather information predicting subject, e.g., meteorological agency, may be a subject which can provide actual wind field data as the past wind field data on target area, e.g., across the Korean peninsula, etc, which includes area the radiosonde and the aircraft can be positioned at respective times from the time t-y to the time t-z.

For reference, the time t-x, the time t-y and the time t-z are all in the past. Herein, the time t-z, the time t-y and the time t-x is closer to the current time t in written order. This means that the time t-z is the closest time from the current time t and the time t-x is the furthest time from the current time t. It is noted that the definition for the time t-x, the time t-y and the time t-z may also be applied to explanations below.

Then, the processor 120 of the server 100 may perform learning operations using training data comprised of the (1_1)-st past trajectory for training and the past wind field data to thereby allow the radiosonde position obtaining part to predict each of first predicted position candidates for training of the radiosonde at respective times from the time t-y to the time t-z at a step of S513. Herein, the learning operations can be different according to algorithms. For example, if a neural network algorithm is used for the learning operations, multiple parameters may be applied to the training data according to a configuration of the neural network to obtain a final value.

Next, the processor 120 of the server 100 may further obtain a (1_2)-nd past trajectory for training of the radiosonde from the time t-y to the time t-z at a step of S514. Herein, the (1_2)-nd past trajectory for training may include a position, a velocity and identification information of the radiosonde from the time t-y to the time t-z.

Then, the processor 120 of the server 100 may compare the (1_2)-nd past trajectory for training serving as a first GT (Ground Truth) with each of the first predicted position candidates for training of the radiosonde at respective times, to thereby allow the radiosonde position obtaining part to perform the machine learning at a step of S515.

And, as still yet another example, when allowing the radiosonde position obtaining part to predict each of first predicted position candidates for training of the radiosonde at respective times from the time t-y to the time t-z, the processor 120 of the server 100 may further consider the altitude characteristics of the radiosonde as described by referring to Fig. 4. Specifically, the processor 120 of the server 100 may determine whether the specific position of the radiosonde at respective times from the time t-y to the time t-z corresponds to the first phase state or the second phase state, and then the server 100 allows the radiosonde position obtaining part to further receive at least one of the first altitude characteristic corresponding to the first phase state and at least one of the second altitude characteristic of the radiosonde corresponding to the second phase state to thereby predict the first predicted position candidates for training of the radiosonde.

Herein, the (1_1)-st past trajectory for training and the (1_2)-nd past trajectory for training are not predicted trajectories. These trajectories are obtained by spectating actual movement of the radiosonde.. However, the first predicted position candidates for training are predicted by the processor 120 of the server 100. It is noted that this may also be applied to explanation below referring to Fig. 5B.

Fig. 5B is a drawing schematically illustrating steps of a machine learning performed on the aircraft position obtaining part in accordance with one example embodiment of the present disclosure.

By referring to Fig. 5B, the machine learning for the aircraft position obtaining part can be performed with following processes.

On condition that past wind field data for the range of the altitude and the range of the time starting from the time t-y to the time t-z have been obtained from the weather information predicting subject at a step of S521, the processor 120 of the server 100 may perform a process of obtaining a (2_1)-st past trajectory for training of the aircraft from the time t-x to the time t-y at a step of S522. Herein, the (2_1)-st past trajectory for training may include a position, a velocity, identification information, departure information and arrival information of the aircraft from the time t-x to the time t-y. Details for the weather information prediction subject, the time t-x, the time t-y and the time t-z are skipped, since it has been already explained above referring to Fig. 5A.

Then, the processor 120 of the server 100 may perform learning operations using training data comprised of the (2_1)-st past trajectory for training and the past wind field data to thereby allow the aircraft position obtaining part to predict each of the second predicted position candidates for training of the aircraft at respective times from the time t-y to the time t-z at a step of S523. Herein, details for the learning operations are skipped, since it has been already explained above referring to Fig. 5A.

Next, the processor 120 of the server 100 may further obtain a (2_2)-nd past trajectory for training of the aircraft from the time t-y to the time t-z at a step of S524. Herein, the (2_2)-nd past trajectory for training may include a position, a velocity, identification information, departure information and arrival information of the aircraft from the time t-y to the time t-z.

Then, the processor 120 of the server 100 may compare the (2_2)-nd past trajectory for training serving as a second GT (Ground Truth) with each of the second predicted position candidates for training of the aircraft at respective times, to thereby allow the aircraft position obtaining part to perform the machine learning at a step of S525.

And, as still yet another example, a machine learning algorithm which is applicable with a back propagation may be applied to the radiosonde position obtaining part and the aircraft position obtaining part respectively, so that the processor 120 of the server 100 may perform processes of (i) allowing the radiosonde obtaining part to compare each of the first predicted position candidates for training of the radiosonde at respective times from the time t-y to the time t-z and the (1_2)-nd past trajectory for training of the radiosonde serving as the first GT (Ground Truth) to thereby perform a first back propagation which adjusts at least one of multiple parameters included in the radiosonde position obtaining part to minimize differences therebetween, and (ii) allowing the aircraft position obtaining part to compare each of the second predicted position candidates for training of the aircraft at respective times from the time t-y to the time t-z and the (2_2)-nd past trajectory for training of the aircraft serving as the second GT (Ground Truth) to thereby perform a second back propagation which adjusts at least one of multiple parameters included in the aircraft position obtaining part to minimize differences therebetween.

Also, as still yet another example, if at least part of each of the first predicted position candidates of the radiosonde at respective times up to the time t+k is included in a predetermined safety airspace for an airport, the processor 120 of the server 100 may provide information thereon to the air traffic control subject of the airport to thereby allow the air traffic control subject to provide a warning signal to an airplane which takes off and lands at the airport.

The present disclosure has an effect of enabling a proactive determination on a possibility of a radiosonde inflicting dangerous effects on an aircraft at a specific predicted position of the aircraft by predicting positions of the radiosonde accurately.

The present disclosure has another effect of increasing accuracy of the predicted positions of the radiosonde and the aircraft at respective times to determine the possibility of the radiosonde inflicting dangerous effect on the aircraft at the specific predicted position of the aircraft more accurately by predicting the positions of the radiosonde and the aircraft using a machine learning.

The embodiments of the present invention as explained above can be implemented in a form of executable program command through a variety of computer means recordable to computer readable media. The computer readable media may include solely or in combination, program commands, data files, and data structures. The program commands recorded to the media may be components specially designed for the present invention or may be usable to a skilled human in a field of computer software. Computer readable media may include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands may include not only a machine language code made by a complier but also a high level code that can be used by an interpreter etc., which is executed by a computer. The aforementioned hardware device may work as more than a software module to perform the action of the present invention and they may do the same in the opposite case.

As seen above, the present invention has been explained by specific matters such as detailed components, limited embodiments, and drawings. They have been provided only to help more general understanding of the present invention. It, however, will be understood by those skilled in the art that various changes and modification may be made from the description without departing from the scope of the invention as defined in the following claims.

Accordingly, the thought of the present invention must not be confined to the explained embodiments, and the following patent claims as well as everything including variations equal or equivalent to the patent claims pertain to the category of the thought of the present invention.

## Claims

1. A computer implemented method for determining predicted positions of a radiosonde and an aircraft at respective times, the method comprising:
obtaining predicted wind field data for a range of an altitude and a range of a time starting from a time t, corresponding to a current time, to a time t+k from a weather information predicting subject,
obtaining, from the radiosonde, a first past trajectory of the radiosonde from a time t-m to the time t, wherein the first past trajectory includes a position, a velocity and identification information of the radiosonde from the time t-m to the time t,
predicting, by a radiosonde position obtaining part, each of first predicted position candidates of the radiosonde at respective times up to the time t+k by referring to the first past trajectory and the predicted wind field data,
obtaining, from the aircraft, a second past trajectory of the aircraft from a time t-n to the time t, wherein the second past trajectory includes a position, a velocity, identification information, departure information and arrival information of the aircraft from the time t-n to the time t,
predicting, by an aircraft position obtaining part, each of second predicted position candidates of the aircraft at respective times up to the time t+k by referring to the second past trajectory and the predicted wind field data,
comparing each of the first predicted position candidates of the radiosonde at respective times up to the time t+k and each of the second predicted position candidates of the aircraft at respective times up to the time t+k, and
if a specific first predicted position, selected from the first predicted position candidates of the radiosonde, at a specific time is included within a first threshold range, wherein the first threshold range is determined by referring to a specific second predicted position selected from the second predicted position candidates of the aircraft at the specific time, determining the specific second predicted position of the aircraft at the specific time to be dangerous,
wherein the radiosonde position obtaining part predicts the first predicted position candidates of the radiosonde by a first machine learning process,
wherein the method further comprises:
obtaining past wind field data for the range of the altitude and a range of a time starting from a time t-y to a time t-z from the weather information predicting subject,
obtaining a third past trajectory for training of the radiosonde from a time t-x to the time t-y, wherein the third past trajectory for training includes a position, a velocity and identification information of the radiosonde from the time t-x to the time t-y,
performing learning operations using training data comprised of the third past trajectory for training and the past wind field data to thereby allow the radiosonde position obtaining part to predict each of first predicted position candidates for training of the radiosonde at respective times from the time t-y to the time t-z,
obtaining a fourth past trajectory for training of the radiosonde from the time t-y to the time t-z, wherein the fourth past trajectory for training includes a position, a velocity and identification information of the radiosonde from the time t-y to the time t-z, and
comparing the fourth past trajectory for training serving as a first ground truth, GT, with each of the first predicted position candidates for training of the radiosonde at respective times, to thereby allow the radiosonde position obtaining part to perform the first machine learning process,
wherein the aircraft position obtaining part predicts the second predicted position candidates of the aircraft by a second machine learning process,
wherein the method further comprises:
obtaining the past wind field data for the range of the altitude and the range of the time starting from the time t-y to the time t-z from the weather information predicting subject,
obtaining a fifth past trajectory for training of the aircraft from the time t-x to the time t-y, wherein the fifth past trajectory for training includes a position, a velocity, identification information, departure information and arrival information of the aircraft from the time t-x to the time t-y,
performing learning operations using training data comprised of the fifth past trajectory for training and the past wind field data to thereby allow the aircraft position obtaining part to predict each of the second predicted position candidates for training of the aircraft at respective times from the time t-y to the time t-z,
obtaining a sixth past trajectory for training of the aircraft from the time t-y to the time t-z, wherein the sixth past trajectory for training includes a position, a velocity, identification information, departure information and arrival information of the aircraft from the time t-y to the time t-z, and
comparing the sixth past trajectory for training serving as a second GT with each of the second predicted position candidates for training of the aircraft at respective times, to thereby allow the aircraft position obtaining part to perform the second machine learning process,
wherein the first and the second machine learning processes for the radiosonde position obtaining part and the aircraft position obtaining part includes:
comparing, by the radiosonde obtaining part, each of the first predicted position candidates for training of the radiosonde at respective times from the time t-y to the time t-z and the fourth past trajectory for training of the radiosonde serving as the first GT to thereby perform a first back propagation which adjusts at least one of multiple parameters included in the radiosonde position obtaining part to minimize differences therebetween, and
comparing, by the aircraft position obtaining part, each of the second predicted position candidates for training of the aircraft at respective times from the time t-y to the time t-z and the sixth past trajectory for training of the aircraft serving as the second GT to thereby perform a second back propagation which adjusts at least one of multiple parameters included in the aircraft position obtaining part to minimize differences therebetween,
wherein each of the first predicted position candidates of the radiosonde at respective times from the time t to the time t+k include first probability values predicted for each of the first predicted position candidates of the radiosonde at respective times from the time t to the time t+k, by referring to the first past trajectory of the radiosonde from the time t-m to the time t,
wherein each of the second predicted position candidates of the aircraft at respective times from the time t to the time t+k include second probability values predicted for each of the second predicted position candidates of the aircraft at respective times from the time t to the time t+k by referring to the second past trajectory of the aircraft from the time t-n to the time t, and
wherein the method further comprises calculating third probability values as collision risks which are degrees of danger of the aircraft colliding with the radiosonde at respective times up to the time t+k by referring to the first probability values for each of the first predicted position candidates and the second probability values for each of the second predicted position candidates.

2. The method of Claim 1, wherein the method further comprises, if at least one specific third probability value selected from the third probability values is identical to or higher than a second threshold, providing the specific third probability value to an air traffic control subject, to thereby allow the air traffic control subject to provide a warning signal to the aircraft.

3. The method of Claim 1, wherein the method further comprises
receiving a broadcasted signal from the aircraft based on an Automatic Dependent Surveillance-Broadcast, ADS-B, system through a separate signal receiving device,
analyzing, by the aircraft position obtaining part, the broadcasted signal so as to obtain the second past trajectory of the aircraft.

4. The method of Claim 1, wherein the radiosonde is determined as present in at least one specific position selected from (i) respective positions at a first phase state where the radiosonde starts to float and reaches a maximum height, and (ii) respective positions at a second phase state where the radiosonde starts to descend after reaching the maximum height, and
wherein the method further comprises:
determining whether the specific position of the radiosonde at respective times from the time t to the time t+k corresponds to the first phase state or the second phase state, and
receiving, by the radiosonde position obtaining part, at least one first altitude characteristic of the radiosonde corresponding to the first phase state and at least one second altitude characteristic of the radiosonde corresponding to the second phase state, to thereby predict the first predicted position candidates of the radiosonde.

5. The method of Claim 1, wherein the radiosonde is determined as present in at least one specific position selected from (i) respective positions at a first phase state where the radiosonde starts to float and reaches a maximum height and (ii) respective positions at a second phase state where the radiosonde starts to descend after reaching the maximum height and
wherein the method further comprises:
determining whether the specific position of the radiosonde at respective times from the time t-y to the time t-z corresponds to the first phase state or the second phase state, and
receiving, by the radiosonde position obtaining part, at least one of the first altitude characteristic corresponding to the first phase state and at least one of the second altitude characteristic of the radiosonde corresponding to the second phase state to thereby predict the first predicted position candidates for training of the radiosonde.

6. The method of Claim 1, wherein the method further comprises, if at least part of each of the first predicted position candidates of the radiosonde at respective times up to the time t+k is included in a predetermined safety airspace for an airport, providing information thereon to an air traffic control subject of the airport to thereby allow the air traffic control subject to provide a warning signal to an airplane which takes off and lands at the airport.

7. A server for determining a degree of danger of an aircraft, the server comprising:
a memory that stores instructions to perform the method according to any one of claim 1-6; and
a processor configured to execute the instructions.

## Patentansprüche

1. Computerimplementiertes Verfahren zur Bestimmung vorhergesagter Positionen einer Radiosonde und eines Flugzeugs zu jeweiligen Zeiten, wobei das Verfahren Folgendes umfasst:
Erhalten vorhergesagter Windfelddaten für einen Höhenbereich und einen Zeitraum beginnend mit einem Zeitpunkt t, der einer aktuellen Zeit entspricht, bis zu einem Zeitpunkt t+k von einer Wetterinformationsvorhersage,
Erhalten, von der Radiosonde, einer ersten vergangenen Flugbahn der Radiosonde von einem Zeitpunkt t-m bis zum Zeitpunkt t, wobei die erste vergangene Flugbahn eine Position, eine Geschwindigkeit und Identifikationsinformationen der Radiosonde vom Zeitpunkt t-m bis zum Zeitpunkt t umfasst,
Vorhersagen, durch einen die Radiosondenposition ermittelnden Teil, jeden von ersten vorhergesagten Positionskandidaten der Radiosonde zu jeweiligen Zeitpunkten bis zum Zeitpunkt t+k unter Bezugnahme auf die erste vergangene Flugbahn und die vorhergesagten Windfelddaten,
Erhalten, vom Flugzeug, einer zweiten vergangenen Flugbahn des Flugzeugs von einem Zeitpunkt t-n bis zum Zeitpunkt t, wobei die zweite vergangene Flugbahn eine Position, eine Geschwindigkeit, Identifikationsinformationen, Abfluginformationen und Ankunftsinformationen des Flugzeugs vom Zeitpunkt t-n bis zum Zeitpunkt t umfasst,
Vorhersagen, durch einen die Flugzeugposition ermittelnden Teil, jeden von zweiten vorhergesagten Positionskandidaten des Flugzeugs zu jeweiligen Zeiten bis zum Zeitpunkt t+k unter Bezugnahme auf die zweite vergangene Flugbahn und die vorhergesagten Windfelddaten,
Vergleichen von jedem der ersten vorhergesagten Positionskandidaten der Radiosonde zu jeweiligen Zeiten bis zum Zeitpunkt t+k und jedem der zweiten vorhergesagten Positionskandidaten des Flugzeugs zu jeweiligen Zeiten bis zum Zeitpunkt t+k, und
falls eine bestimmte erste vorhergesagte Position, ausgewählt aus den ersten vorhergesagten Positionskandidaten der Radiosonde, zu einem bestimmten Zeitpunkt innerhalb eines ersten Schwellenwertbereichs liegt, wobei der erste Schwellenwertbereich durch Bezugnahme auf eine bestimmte zweite vorhergesagte Position bestimmt wird, die aus den zweiten vorhergesagten Positionskandidaten des Flugzeugs zu dem bestimmten Zeitpunkt ausgewählt wird, Bestimmen der bestimmten zweiten vorhergesagten Position des Flugzeugs zu dem bestimmten Zeitpunkt als gefährlich,
wobei der die Radiosondenposition ermittelnde Teil die ersten vorhergesagten Positionskandidaten der Radiosonde durch einen ersten maschinellen Lernprozess vorhersagt,
wobei das Verfahren ferner Folgendes umfasst:
Erhalten von vergangenen Windfelddaten für den Höhenbereich und einen Zeitraum beginnend von einem Zeitpunkt t-y bis zu einem Zeitpunkt t-z von der Wetterinformationsvorhersage,
Erhalten einer dritten vergangenen Flugbahn für das Training der Radiosonde von einem Zeitpunkt t-x bis zum Zeitpunkt t-y, wobei die dritte vergangene Flugbahn für das Training eine Position, eine Geschwindigkeit und Identifikationsinformationen der Radiosonde vom Zeitpunkt t-x bis zum Zeitpunkt t-y umfasst,
Durchführen von Lernvorgängen unter Verwendung von Trainingsdaten, die aus der dritten vergangenen Flugbahn für das Training und den vergangenen Windfelddaten bestehen, um es dem die Radiosondenposition ermittelnden Teil zum zu ermöglichen, jeden der ersten vorhergesagten Positionskandidaten für das Training der Radiosonde zu den jeweiligen Zeiten vom Zeitpunkt t-y bis zum Zeitpunkt t-z vorherzusagen,
Erhalten einer vierten vergangenen Flugbahn für das Training der Radiosonde vom Zeitpunkt t-y bis zum Zeitpunkt t-z, wobei die vierte vergangene Flugbahn für das Training eine Position, eine Geschwindigkeit und Identifikationsinformationen der Radiosonde vom Zeitpunkt t-y bis zum Zeitpunkt t-z umfasst, und
Vergleichen der vierten vergangenen Flugbahn für das Training, die als erste Ground Truth, GT, dient, mit jedem der ersten vorhergesagten Positionskandidaten für das Training der Radiosonde zu jeweiligen Zeiten, um es dadurch dem die Radiosondenposition ermittelnden Teil zu ermöglichen, den ersten maschinellen Lernprozess durchzuführen,
wobei der die Flugzeugposition ermittelnde Teil die zweiten vorhergesagten Positionskandidaten des Flugzeugs durch einen zweiten maschinellen Lernprozess vorhersagt,
wobei das Verfahren ferner Folgendes umfasst:
Erhalten der vergangenen Windfelddaten für den Höhenbereich und den Zeitraum vom Zeitpunkt t-y bis zum Zeitpunkt t-z von der Wetterinformationsvorhersage,
Erhalten einer fünften vergangenen Flugbahn für das Training des Flugzeugs vom Zeitpunkt t-x bis zum Zeitpunkt t-y, wobei die fünfte vergangene Flugbahn für das Training eine Position, eine Geschwindigkeit, Identifikationsinformationen, Abfluginformationen und Ankunftsinformationen des Flugzeugs vom Zeitpunkt t-x bis zum Zeitpunkt t-y umfasst,
Durchführen von Lernoperationen unter Verwendung von Trainingsdaten, bestehend aus der fünften vergangenen Flugbahn für das Training und den vergangenen Windfelddaten, um es so zu ermöglichen, dass die Flugzeugposition ermittelnde Teil jeden der zweiten vorhergesagten Positionskandidaten für das Training des Flugzeugs zu jeweiligen Zeitpunkten vom Zeitpunkt t-y bis zum Zeitpunkt t-z vorhersagt,
Erhalten einer sechsten vergangenen Flugbahn für das Training des Flugzeugs vom Zeitpunkt t-y bis zum Zeitpunkt t-z, wobei die sechste vergangene Flugbahn für das Training eine Position, eine Geschwindigkeit, Identifikationsinformationen, Abfluginformationen und Ankunftsinformationen des Flugzeugs vom Zeitpunkt t-x bis zum Zeitpunkt t-y umfasst, und
Vergleichen der sechsten vergangenen Flugbahn für das Training, die als zweiter GT dient, mit jedem der zweiten vorhergesagten Positionskandidaten für
das Training des Flugzeugs zu jeweiligen Zeiten, um es dadurch dem die Flugzeugposition ermittelnden Teil zu ermöglichen, den zweiten maschinellen Lernprozess durchzuführen,
wobei der erste und der zweite maschinelle Lernprozess für den die Radiosondenposition ermittelnden Teil und den Flugzeugposition ermittelnden Teil Folgendes umfassen:
Vergleichen, durch den die Radiosonde ermittelnden Teil, jedes der ersten vorhergesagten Positionskandidaten für das Training der Radiosonde zu jeweiligen Zeiten vom Zeitpunkt t-y bis zum Zeitpunkt t-z und der vierten vergangenen Flugbahn für das Training der Radiosonde, die als erster GT dient, um dadurch eine erste Backpropagation auszuführen, die mindestens einen von mehreren Parametern anpasst, die vom die Radiosondenposition ermittelnden Teil umfasst sind, um Unterschiede zwischen ihnen zu minimieren, und
Vergleichen, durch den die Flugzeugposition ermittelnden Teil, jedes der zweiten vorhergesagten Positionskandidaten für das Training des Flugzeugs zu jeweiligen Zeiten vom Zeitpunkt t-y bis zum Zeitpunkt t-z und der sechsten vergangenen Flugbahn für das Training des Flugzeugs, die als zweiter GT dient, um dadurch eine zweite Backpropagation durchzuführen, die mindestens einen von
mehreren Parametern anpasst, die vom die Flugzeugposition ermittelnden Teil umfasst sind, um Unterschiede zwischen ihnen zu minimieren,
wobei jeder der ersten vorhergesagten Positionskandidaten der Radiosonde zu jeweiligen Zeiten vom Zeitpunkt t bis zum Zeitpunkt t+k erste Wahrscheinlichkeitswerte umfasst, die für jeden der ersten vorhergesagten Positionskandidaten der Radiosonde zu jeweiligen Zeiten vom Zeitpunkt t bis zum Zeitpunkt t+k vorhergesagt wurden, indem auf die erste vergangene Flugbahn der Radiosonde vom Zeitpunkt t-m bis zum Zeitpunkt t Bezug genommen wird,
wobei jeder der zweiten vorhergesagten Positionskandidaten des Flugzeugs zu jeweiligen Zeiten vom Zeitpunkt t bis zum Zeitpunkt t+k zweite Wahrscheinlichkeitswerte umfasst, die für jeden der zweiten vorhergesagten Positionskandidaten des Flugzeugs zu jeweiligen Zeiten vom Zeitpunkt t bis zum Zeitpunkt t+k vorhergesagt wurden, durch Bezugnahme auf die zweite vergangene Flugbahn des Flugzeugs vom Zeitpunkt t-n bis zum Zeitpunkt t, und
wobei das Verfahren weiterhin das Berechnen dritter Wahrscheinlichkeitswerte als Kollisionsrisiken umfasst, bei denen es sich um die Gefährdungsgrade einer Kollision des Flugzeugs mit der Radiosonde zu jeweiligen Zeiten bis zum Zeitpunkt t+k handelt, indem auf die ersten Wahrscheinlichkeitswerte für jeden der ersten vorhergesagten Positionskandidaten und die zweiten Wahrscheinlichkeitswerte für jeden der zweiten vorhergesagten Positionskandidaten Bezug genommen wird.

2. Verfahren nach Anspruch 1, wobei das Verfahren ferner, wenn mindestens ein spezifischer dritter Wahrscheinlichkeitswert, der aus den dritten Wahrscheinlichkeitswerten ausgewählt wird, mit einem zweiten Schwellenwert identisch oder höher ist, das Bereitstellen des spezifischen dritten Wahrscheinlichkeitswerts an eine Flugverkehrssicherung umfasst, um es der Flugverkehrssicherung zu ermöglichen, ein Warnsignal an das Flugzeug zu senden.

3. Verfahren nach Anspruch 1, wobei das Verfahren weiterhin Folgendes umfasst:
Empfangen eines Funksignals vom Flugzeug basierend auf einem ADS-B-System (Automatic Dependent Surveillance-Broadcast) über ein separates Signalempfangsgerät,
Analysieren des gesendeten Signals durch den die Flugzeugposition ermittelnden Teil, um die zweite vergangene Flugbahn des Flugzeugs zu erhalten.

4. Verfahren nach Anspruch 1, wobei festgestellt wird, dass die Radiosonde an mindestens einer spezifischen Position vorhanden ist, die ausgewählt wird aus (i) jeweiligen Positionen in einem ersten Phasenzustand, bei dem die Radiosonde zu schweben beginnt und eine maximale Höhe erreicht, und (ii) entsprechende Positionen in einem zweiten Phasenzustand, bei dem die Radiosonde nach Erreichen der maximalen Höhe abzusinken beginnt, und
wobei das Verfahren ferner Folgendes umfasst:
Bestimmen, ob die spezifische Position der Radiosonde zu jeweiligen Zeiten vom Zeitpunkt t bis zum Zeitpunkt t+k dem ersten Phasenzustand oder dem zweiten Phasenzustand entspricht, und
Empfangen, durch den die Radiosondenposition ermittelnden Teil, mindestens einer ersten Höheneigenschaft der Radiosonde, die dem ersten Phasenzustand entspricht und mindestens einer zweiten Höheneigenschaft der Radiosonde, die dem zweiten Phasenzustand entspricht, um dadurch die ersten vorhergesagten Positionskandidaten der Radiosonde vorherzusagen.

5. Verfahren nach Anspruch 1, wobei festgestellt wird, dass die Radiosonde an mindestens einer spezifischen Position vorhanden ist, die ausgewählt wird aus (i) jeweiligen Positionen in einem ersten Phasenzustand, in dem die Radiosonde zu schweben beginnt und eine maximale Höhe erreicht, und (ii) entsprechende Positionen in einem zweiten Phasenzustand, in dem die Radiosonde nach Erreichen der maximalen Höhe abzusinken beginnt, und
wobei das Verfahren ferner Folgendes umfasst:
Bestimmen, ob die spezifische Position der Radiosonde zu jeweiligen Zeiten vom Zeitpunkt t-y bis zum Zeitpunkt t-z dem ersten Phasenzustand oder dem zweiten Phasenzustand entspricht, und
Empfangen, durch den die Radiosondenposition ermittelnden Teil, von mindestens einer der ersten Höheneigenschaften, entsprechend dem ersten Phasenzustand, und mindestens einer der zweiten Höheneigenschaften der Radiosonde, entsprechend dem zweiten Phasenzustand, um dadurch die ersten vorhergesagten Positionskandidaten für das Training der Radiosonde vorherzusagen.

6. Das Verfahren nach Anspruch 1, wobei das Verfahren ferner umfasst, falls zumindest ein Teil jedes der ersten vorhergesagten Positionskandidaten der Radiosonde zu den jeweiligen Zeiten bis zum Zeitpunkt t+k in einem vorbestimmten Sicherheitsluftraum für einen Flughafen vorkommen, dass Informationen darüber an eine Flugverkehrssicherung des Flughafens weitergegeben werden, um es der Flugverkehrssicherung zu ermöglichen, einem Flugzeug, das auf dem Flughafen startet und landet, ein Warnsignal zu geben.

7. Server zum Bestimmen eines Gefährdungsgrades eines Flugzeugs, wobei der Server Folgendes umfasst:
einen Speicher, der Anweisungen zum Durchführen des Verfahrens nach einem der Ansprüche 1-6 speichert; und
einen Prozessor, der so konfiguriert ist, dass er die Anweisungen ausführt.

## Revendications

1. Procédé mis en oeuvre par ordinateur pour déterminer des positions prédites d'une radiosonde et d'un aéronef à des moments respectifs, le procédé comprenant :
l'obtention de données de champ de vent prédites pour une plage d'une altitude et une plage d'un moment commençant à partir d'un moment t, correspondant à un moment actuel, jusqu'à un moment t + k à partir d'un sujet prédisant des informations météorologiques,
l'obtention, à partir de la radiosonde, d'une première trajectoire passée de la radiosonde à partir d'un moment t-m jusqu'au moment t, dans lequel la première trajectoire passée inclut une position, une vitesse et des informations d'identification de la radiosonde à partir du moment t-m jusqu'au moment t,
la prédiction, par une partie d'obtention de position de radiosonde, de chacune des premières positions candidates prédites de la radiosonde à des moments respectifs jusqu'au moment t + k par référence à la première trajectoire passée et aux données de champ de vent prédites, l'obtention, à partir de l'aéronef, d'une deuxième trajectoire passée de l'aéronef à partir d'un moment t-n jusqu'au moment t, dans lequel la deuxième trajectoire passée inclut une position, une vitesse, des informations d'identification, des informations de départ et des informations d'arrivée de l'aéronef à partir du moment t-n jusqu'au moment t,
la prédiction, par une partie d'obtention de position d'aéronef, de chacune des secondes positions candidates prédites de l'aéronef à des moments respectifs jusqu'au moment t + k par référence à la deuxième trajectoire passée et aux données de champ de vent prédites,
la comparaison de chacune des premières positions candidates prédites de la radiosonde à des moments respectifs jusqu'au moment t + k et de chacune des secondes positions candidates prédites de l'aéronef à des moments respectifs jusqu'au moment t + k, et
si une première position prédite spécifique, sélectionnée parmi les premières positions candidates prédites de la radiosonde, à un moment spécifique est incluse dans une première plage de seuil, la première plage de seuil étant déterminée par référence à une seconde position prédite spécifique sélectionnée parmi les secondes positions candidates prédites de l'aéronef au moment spécifique, la détermination de la seconde position prédite spécifique de l'aéronef au moment spécifique comme étant dangereuse,
dans lequel la partie d'obtention de position de radiosonde prédit les premières positions candidates prédites de la radiosonde par un premier processus d'apprentissage automatique,
dans lequel le procédé comprend en outre :
l'obtention de données de champ de vent passées pour la plage de l'altitude et une plage d'un moment commençant à partir d'un moment t-y jusqu'à un moment t-z à partir du sujet prédisant des informations météorologiques, l'obtention d'une troisième trajectoire passée pour entraîner la radiosonde à partir d'un moment t-x jusqu'au moment t-y, dans lequel la troisième trajectoire passée d'entraînement inclut une position, une vitesse et des informations d'identification de la radiosonde à partir du moment t-x jusqu'au moment t-y,
la réalisation d'opérations d'apprentissage en utilisant des données d'entraînement composées de la troisième trajectoire passée d'entraînement et des données de champ de vent passées pour ainsi permettre à la partie d'obtention de position de radiosonde de prédire chacune des premières positions candidates prédites pour l'entraînement de la radiosonde à des moments respectifs à partir du moment t-y jusqu'au moment t-z,
l'obtention d'une quatrième trajectoire passée pour l'entraînement de la radiosonde à partir du moment t-y jusqu'au moment t-z, dans lequel la quatrième trajectoire passée pour l'entraînement inclut une position, une vitesse et des informations d'identification de la radiosonde à partir du moment t-y jusqu'au moment t-z, et
la comparaison de la quatrième trajectoire passée pour l'entraînement servant de première vérité terrain, GT, avec chacune des premières positions candidates prédites pour l'entraînement de la radiosonde à des moments respectifs, pour ainsi permettre à la partie d'obtention de position de radiosonde de réaliser le premier processus d'apprentissage automatique, dans lequel la partie d'obtention de position d'aéronef prédit les secondes positions candidates prédites de l'aéronef par un deuxième processus d'apprentissage automatique,
dans lequel le procédé comprend en outre :
l'obtention des données de champ de vent passées pour la plage de l'altitude et la plage du moment en commençant à partir du moment t-y jusqu'au moment t-z à partir du sujet de prédiction d'informations météorologiques, l'obtention d'une cinquième trajectoire passée pour l'entraînement de l'aéronef à partir du moment t-x jusqu'au moment t-y, dans lequel la cinquième trajectoire passée pour l'entraînement inclut une position, une vitesse, des informations d'identification, des informations de départ et des informations d'arrivée de l'aéronef à partir du moment t-x jusqu'au moment t-y,
la réalisation d'opérations d'apprentissage en utilisant des données d'entraînement composées de la cinquième trajectoire passée pour l'entraînement et les données de champ de vent passées pour ainsi permettre à la partie d'obtention de position d'aéronef de prédire chacune des secondes positions candidates prédites pour l'entraînement de l'aéronef à des moments respectifs à partir du moment t-y jusqu'au moment t-z,
l'obtention d'une sixième trajectoire passée pour l'entraînement de l'aéronef à partir du moment t-y jusqu'au moment t-z, dans lequel la sixième trajectoire passée pour l'entraînement inclut une position, une vitesse, des informations d'identification, des informations de départ et des informations d'arrivée de l'aéronef à partir du moment t-y jusqu'au moment t-z, et
la comparaison de la sixième trajectoire passée pour l'entraînement servant de deuxième GT à chacune des secondes positions candidates prédites pour l'entraînement de l'aéronef à des moments respectifs, pour ainsi permettre à la partie d'obtention de position d'aéronef de réaliser le deuxième processus d'apprentissage automatique,
dans lequel les premiers et deuxième processus d'apprentissage automatique pour la partie d'obtention de position de radiosonde et la partie d'obtention de position d'aéronef incluent :
la comparaison, par la partie d'obtention de radiosondes, de chacune des premières positions candidates prédites pour l'entraînement de la radiosonde à des moments respectifs à partir du moment t-y jusqu'au moment t-z et de la quatrième trajectoire passée pour l'entraînement de la radiosonde servant de première GT pour ainsi réaliser une première rétro-propagation qui ajuste au moins un de multiples paramètres inclus dans la partie d'obtention de position de radiosonde pour réduire à un minimum les différences entre celles-ci, et la comparaison, par la partie d'obtention de position d'aéronef, de chacune des secondes positions candidates prédites pour l'entraînement de l'aéronef à des moments respectifs à partir du moment t-y jusqu'au moment t-z et de la sixième trajectoire passée pour l'entraînement de l'aéronef servant de deuxième GT pour ainsi réaliser une deuxième rétro-propagation qui ajuste au moins un de multiples paramètres inclus dans la partie d'obtention de position d'aéronef pour réduire à un minimum les différences entre celles-ci,
dans lequel chacune des premières positions candidates prédites de la radiosonde à des moments respectifs à partir du moment t jusqu'au moment t + k inclut des premières valeurs de probabilité prédites pour chacune des premières positions candidates prédites de la radiosonde à des moments respectifs à partir du moment t jusqu'au moment t + k, par référence à la première trajectoire passée de la radiosonde à partir du moment t-m jusqu'au moment t,
dans lequel chacune des secondes positions candidates prédites de l'aéronef à des moments respectifs à partir du moment t jusqu'au moment t + k inclut des deuxièmes valeurs de probabilité prédites pour chacune des secondes positions candidates prédites de l'aéronef à des moments respectifs à partir du moment t jusqu'au moment t + k par référence à la deuxième trajectoire passée de l'aéronef à partir du moment t-n jusqu'au moment t, et
dans lequel le procédé comprend en outre le calcul de troisièmes valeurs de probabilité comme des risques de collision qui sont des degrés de danger que l'aéronef entre en collision avec la radiosonde à des moments respectifs jusqu'au moment t + k par référence aux premières valeurs de probabilité de chacune des premières positions candidates prédites et des deuxièmes valeurs de probabilité pour chacune des secondes positions candidates prédites.

2. Procédé selon la revendication 1, dans lequel le procédé comprend en outre, si au moins une troisième valeur de probabilité spécifique sélectionnée parmi les troisièmes valeurs de probabilité est identique ou supérieure à un second seuil, la fourniture de la troisième valeur de probabilité spécifique à un sujet de régulation du trafic aérien, pour ainsi permettre au sujet de régulation du trafic aérien de fournir un signal d'avertissement à l'aéronef.

3. Procédé selon la revendication 1, dans lequel le procédé comprend en outre
la réception d'un signal diffusé par l'aéronef sur la base d'un système de surveillance automatique dépendante par diffusion, ADS-B, par l'intermédiaire d'un dispositif de réception de signal distinct,
l'analyse, par la partie d'obtention de position d'aéronef, du signal diffusé pour obtenir la deuxième trajectoire passée de l'aéronef.

4. Procédé selon la revendication 1, dans lequel la radiosonde est déterminée comme présente dans au moins une position spécifique sélectionnée parmi (i) des positions respectives à un premier état de phase où la radiosonde commence à flotter et atteint une hauteur maximale, et (ii) des positions respectives à un second état de phase où la radiosonde commence à descendre après avoir atteint la hauteur maximale, et
dans lequel le procédé comprend en outre :
la détermination du fait que la position spécifique de la radiosonde à des moments respectifs à partir du moment t jusqu'au moment t + k correspond au premier état de phase ou au second état de phase, et
la réception, par la partie d'obtention de position de radiosonde, d'au moins une première caractéristique d'altitude de la radiosonde correspondant au premier état de phase et d'au moins une deuxième caractéristique d'altitude de la radiosonde correspondant au second état de phase, pour ainsi prédire les premières positions candidates prédites de la radiosonde.

5. Procédé selon la revendication 1, dans lequel la radiosonde est déterminée comme présente dans au moins une position spécifique sélectionnée parmi (i) des positions respectives à un premier état de phase où la radiosonde commence à flotter et atteint une hauteur maximale et (ii) des positions respectives à un second état de phase où la radiosonde commence à descendre après avoir atteint la hauteur maximale et
dans lequel le procédé comprend en outre :
la détermination du fait que la position spécifique de la radiosonde à des moments respectifs à partir du moment t-y jusqu'au moment t-z correspond au premier état de phase ou au second état de phase, et
la réception, par la partie d'obtention de position de radiosonde, d'au moins une de la première caractéristique d'altitude correspondant au premier état de phase et d'au moins une de la deuxième caractéristique d'altitude de la radiosonde correspondant au second état de phase pour ainsi prédire les premières positions candidates prédites de la radiosonde.

6. Procédé selon la revendication 1, dans lequel le procédé comprend en outre, si au moins une partie de chacune des premières positions candidates prédites de la radiosonde à des moments respectifs jusqu'au moment t + k est incluse dans un espace de sécurité prédéterminé pour un aéroport, la fourniture d'informations sur celles-ci à un sujet de régulation du trafic aérien de l'aéroport pour ainsi permettre au sujet de régulation du trafic aérien de fournir un signal d'avertissement à un avion qui décolle de et atterrit à l'aéroport.

7. Serveur de détermination d'un degré de danger d'un aéronef, le serveur comprenant :
une mémoire qui stocke des instructions pour réaliser le procédé selon l'une quelconque des revendications 1 à 6 ; et
un processeur configuré pour exécuter les instructions.
